# EUROPEAN PATENT APPLICATION

(11) **EP 1 749 862 A2**
(43) Date of publication of application: **07.02.2007**
(21) Application number: 06254088.5
(22) Date of filing: 03.08.2006
(51) Int. Cl.: C09D 5/20, C09D 5/02

(54) **Peelable opaque coating and method of using the same**

(30) Priority: 05.08.2005 US 705773 P
(71) Applicant: Rohm and Haas Electronic Materials, L.L.C., Marlborough, Massachusetts 01752 (US)
(72) Inventor: Barr, Robert K., Shrewsbury, Massachusetts 01545 (US); O'Connor, Corey, Worcester, Massachusetts 01505 (US)
(74) Representative: Kent, Venetia Katherine

(57) **Abstract**

Opaque coating compositions and methods of using the coating compositions are disclosed. The opaque coating compositions can be applied to a substrate and imaged. The image on the opaque coating compositions can be used to direct workers to modify a substrate. The opaque coating compositions may be peeled from the substrate.

## Description

The present invention is directed to improved opaque coating compositions. More specifically, the present invention is directed to improved opaque coating compositions that can be imaged and peeled from a substrate.

A variety of coatings are known. Many of such coatings are polymer based, and are applied to the surfaces of substrates such as metal, glass, and polymers which may or may not already be coated with one or more coating compositions. While many of these coatings are intended to be permanent, there also are coatings that are intended to be temporary. Such temporary coatings may provide protection to surfaces against deterioration due to adverse environmental conditions, such as, for example, contact with sharp objects, with objects bearing transferable color bodies, and with acid rain and other airborne and waterborne contaminants. Although the time interval during which the coating provides protection may be as long as months, or even years, workers desire that such temporary coatings are removable when the level of protection they provide is no longer needed.

Removable coatings are used, for example, during the production, storage, and distribution of vehicles, aircraft, appliances, computers, furniture, sporting equipment, and the parts from which they are manufactured, as well as building materials and various types of packaging. In addition to the coating being removable, the industries using such coating prefer that they leave no coating residues after removal and are environmentally friendly.

Opaque peelable multi-layer films typically are used in the food packaging industry. Such opaque peelable films may be composed of a core layer containing an olefin polymer; a skin layer containing a blend of a butylene polymer with another olefin polymer, or a polymer of butylene and at least one other olefin; and a coating layer on the skin layer. The opacity of such multi-layer films is due to the core layer containing vacuole initiating solid particles and minor amounts of light absorbing pigments.

Vacuole initiating particles are particles which are incompatible with the polymer matrix and result in the formation of vacuole-like cavities when the films are stretched. An example of such a particle is nylon. Size, type and number of the vacuoles depend on the material and on the size of the solid particles and on the stretching conditions, such as stretching ratio and stretching temperature. The vacuoles reduce the density and give the films a characteristic mother-of-pearl-like, opaque appearance caused by light scattering at the vacuole/polymer matrix interfaces. In general, the mean particle diameter of the vacuole initiating particle is from 0.02µm to 10µm. However, such opaque films are known in the industry to have limited suitability because they typically have poor tear propagation and leave undesired film residues on substrates from which they are removed.

The aircraft industry currently employs amine-based coatings on aluminum skins of aircraft that require the dried film to be removed with high volatile organic solvents such as methylethyl ketone-based solvents. However, this film is riddled with various problems. For example, the removal process is expensive because of the cost associated with the use of organic solvents used to remove the amine-based coating. Further, such coatings do not fully protect the aluminum skins, thereby, requiring many hours of coating removal, polishing and re-surfacing or finishing work to bring the skins to manufacturers specifications. These additional re-furbishing steps increase manufacturing costs.

Additionally, these conventional amine coatings have serious ramifications for the environment as well because of the large amounts of volatile organic compounds (VOCs) that are released into the atmosphere during their application and removal. For example, it takes about 300 gallons of amine-based remover to remove the amine-based coating from an average sized airliner and then about 250 gallons of methylethyl ketone per aircraft to remove the residue left by the amine-based remover. Additionally, the amine coating looses its ability to release, which requires larger volumes of stronger solvents.

The automotive industry also has a need for coatings to protect automobiles from weathering, contamination from the atmosphere, chemical attack or accidental damage during manufacturing, handling, storage and transit. Absent to a protective coating, the vehicle's paint is vulnerable to significant in-house mutilation and physical damage on the assembly line. U.S. 6,555,615 discloses a removable coating for protecting vehicles from foreign objects, from the deleterious effects of weathering and from attack by pollutants such as acid rain. The coating may be removed by peeling it from the vehicle without the use of volatile organic compounds.

Although there are coatings which are peelable, there is still a need for an opaque peelable coating which may be imaged and all of the coating readily removed from a substrate without the need for volatile organic compounds. Such a coating would be selectively imageable such that a pattern could be formed on the coating. The patterned coating could then be applied to a substrate where workers could execute one or more tasks on the substrate to modify it. The coating could then be easily removed and discarded without the use of environmentally unfriendly solvents.

Compositions include one or more opacifying compounds in amounts of 5wt% to 80wt% and one or more amphoteric compounds chosen from amino carboxylic acids, amphoteric imidazoline derivatives, betaines, fluorocarbons, siloxane versions thereof and macromolecular amphoteric surfactants.

In another aspect, the compositions include one or more opacifying compounds in amounts of 10wt% to 50wt% and one or more amphoteric compounds chosen from α-aminocarboxylic acids, β-aminocarboxylic acids and salts thereof.

The compositions are opaque and are readily peelable from a substrate. Accordingly, no environmentally unfriendly solvents are used to remove the compositions from the substrate. Additionally, the compositions may be applied to a substrate to form a coating and imaged. Workers may then execute one or more tasks on the substrate as directed by the image to modify it.

In a further aspect, methods of imaging include providing a composition including one or more opacifying compounds and one or more amphoteric compounds chosen from amino carboxylic acids, amphoteric imidazoline derivatives, betaines, fluorocarbons, siloxane versions thereof and macromolecular amphoteric surfactants; applying the composition to a substrate; selectively imaging the composition to form a patterned mask; and executing one or more tasks on the substrate to modify the substrate. The patterned mask may be removed from the substrate by peeling.

In an additional aspect, methods of imaging include providing a composition including one or more opacifying compounds and one or more amphoteric compounds chosen from amino carboxylic acids, amphoteric imidazoline derivatives, betaines, fluorocarbons, siloxane version thereof and macromolecular amphoteric surfactants; applying the composition to a first substrate; selectively imaging the composition to form a patterned mask; removing the patterned mask from the first substrate; applying the patterned mask to a second substrate; and executing one or more tasks on the second substrate as directed by the patterned mask. The patterned mask may be removed from the second substrate by peeling.

The compositions may be applied on substrates such as, but not limited to, metal, glass, ceramics, wood, and polymer materials and imaged using apparatus such as, but not limited to, lasers, laser printers, and ink-jet apparatus. The imaged pattern on the mask may be used to indicate which parts of a substrate are to be painted, cut, or where holes are to be made for fasteners.

As used throughout this specification, the following abbreviations have the following meaning, unless the context indicates otherwise: °C = degrees Centigarde; T_{g} = glass transition temperature; gm = gram; mg = milligram; L = liter; mL = milliliter; 1 mil = 0.001 inches; 2.54 cm = 1 inch; wt% = weight percent; nm = nanometer = 10⁻⁹ meters; cm = centimeters; mm = millimeters; and µm = microns.

The terms "polymer" and "copolymer" are used interchangeably throughout this specification. "(Meth)acrylate" includes both methacrylate and acrylate, and "(meth)acrylic acid" includes both methacrylic acid and acrylic acid. "Diluent" means a carrier or vehicle, such as solvents or solid fillers. "Opacity" means the property of being impervious to light rays, i.e. not transparent or translucent. "Opaque" means nontransparent and nontranslucent. "Translucent" means semitransparent. "Transparent" means a passage of rays of the visible spectrum.

Unless otherwise noted, all percentages are by weight and are based on dry weight or solvent free weight. All numerical ranges are inclusive and combinable in any order, except where it is logical that such numerical ranges are constrained to add up to 100%.

The compositions include one or more opacifying compounds in amounts of 5wt% to 80wt%, or such as from 10wt% to 50wt%, or such as from 20wt% to 40wt%, and one or more amphoteric compounds chosen from amino carboxylic acids, amphoteric imidazoline derivatives, betaines, fluorocarbons, siloxane versions thereof and macromolecular amphoteric surfactants.

The imaging compositions may be applied to a substrate by any suitable method including, but not limited to, spraying, brushing, roller coating, dipping and applying by hand. The compositions may be removed from the substrate by peeling. Peeling avoids the use of environmentally hazardous solvents.

Any suitable opacifying compound which provides a desired contrast with the substrate may be used. Such compounds provide a contrast between the compositions and the substrate on which they are applied. Additionally, the contrast with the substrate enables workers to see any undesired residue left on the substrate after the composition is removed.

Opacifying compounds include, but are not limited to, pigments (inorganic and organic), metal salts, silica, silicates and clays. Inorganic pigments include, but are not limited to, oxides such as titanium dioxide, zirconium oxide, ceric oxide, antimony trioxide, arsenic pentoxide, aluminum oxide, zinc oxide, cobalt oxide, cadmium oxide, chromium oxide, magnesium oxide, iron oxide and lead oxide. Metal salts include, but are not limited to, sulfides, sulfates, carbonates and hydroxides. Typically, the opacifying compounds are inorganic pigments such as titanium dioxide, aluminum oxide, ceric oxide, antimony trioxide, arsenic pentoxide, cadmium oxide, chromium oxide, zirconium oxide and silicates, and organic pigments such as indigo, phthalocyanine, para red and flavanoids such as red, yellow, blue, orange and ivory colors. Also, mixed phase titanates such as C.I. (color index) Pigment Green-Yellow PY-53, C.I. Pigment Yellow PY-53 and C.I. Pigment Red-Yellow PBr-24, mixed phase metal oxides such as C.I. Pigment Yellow PY-119, C.I. Pigment Brown PBr-29 and C.I. Pigment Brown PBr-31. More typically the opacifying compounds are inorganic pigments such as titanium dioxide, aluminum oxide and zirconium oxide. Most typically the inorganic pigment is titanium dioxide. The opacifying compounds have an average size of 0.01 µm to 10µm, or such as from 0.5µm to 5µm, or such as from 1µm to 3µm.

One or more amphoteric surfactants are included to function as release agents such that the compositions may be peeled from a substrate. Such surfactants also stabilize particles of the polymers during and after aqueous emulsion polymerization, or other dispersion polymerizations. Suitable amphoteric surfactants are those which have weakly acidic functionalities such as carboxy functionalities, and have isoelectric points of from pH 3 to pH 8. Such amphoteric surfactants may be included in the second component in amounts of from 0.1wt% to 6wt%, or such as from 0.25wt% to 5wt%, or such as from 0.5wt% to 4wt% of the film forming binder polymer. Such amphoteric surfactants are chosen from amino carboxylic acids, amphoteric imidazoline derivatives, betaine, fluorocarbon and siloxane versions thereof and mixtures thereof.

Any of the aminocarboxylic acids may have carboxy moieties present in either protonated form or in carboxylate form. Where more than one carboxy group is present on a molecule, those carboxy groups may all be in protonated form, in carboxylate form, or they may be present as some mixture of protonated and carboxylate forms. Furthermore, the ratio of protonated to unprotonated carboxy moieties may vary from one molecule to another, otherwise identical, molecule in a given system. Cations present as counter ions for the carboxylate moieties include cations of lithium, sodium, potassium, amines (i.e., ammonium cations derived from protonation or other quaternary substitution of amines), zinc, zirconium, calcium, magnesium, and aluminum. Any of the aminocarboxylic acids may have amino moieties present in either protonated (ammonium) or free amine form (i.e., as deprotonated primary, secondary, or tertiary amine). Where more than one amino group is present on a molecule, those amino groups may all be in protonated form, in free amine form, or they may be present as some mixture of protonated and free amine forms. Again, the ratio of protonated to unprotonated amine moieties may vary from one molecule to another, otherwise identical, molecule in a given system. Anions present as counter ions for the ammonium moieties include chloride, bromide, sulfate, carbonate, hydroxide, formate, acetate, propionate and other carboxylate anions.

Suitable aminocarboxylic acids include, but are not limited to: α-aminocarboxylic acids having the general formula R₁₂-NH-CH₂COOH, where R₁₂=C₄-C₂₀ linear or branched, alkyl, alkenyl, or fluoro or silicone functional hydrophobe group; and β-aminocarboxylic acids having the general structures: R₁₂-NH-CH₂CH₂COOH and R₁₂N(CH₂CH₂COOH)₂, where R₁₂=C₄-C₂₀ linear or branched, alkyl, alkenyl, or fluoro or silicone functional hydrophobe group, β-aminocarboxylic acids are available from Henkel Corporation, King of Prussia, Pa., under the name DERIPHAT™. Unless otherwise stated, the DERIPHAT™ ampholytes have the general formula R₁₃-NHCH₂CH₂COOH, where R₁₃=residue of coconut fatty acids, residue of tallow fatty acids, lauric acid, myristic acid, oleic acid, palmitic acid, stearic acid, linoleic acid, other C₄-C₂₀ linear or branched, alkyl, alkenyl, and mixtures thereof DERIPHAT™ ampholytes useful in the present invention include: sodium-N-coco-β-aminopropionate (DERIPHAT™ 151, flake 97% active); N-coco-β-aminopropionic acid (DERPHAT™ 151C, 42% solution in water); N-lauryl/myristyl-β-aminopropionic acid (DERIPHAT™ 17° C., 50% in water); disodium-N-tallow-β-iminodipropionate, R₁₄N(CH₂CH₂COONa)₂, (DERIPHAT™ 154, flake 97% active); disodium-N-lauryl-β-iminodipropionate (DERIPHAT™ 160, flake 97% active); and partial sodium salt of N-lauryl-β-iminodipropionic acid, R₁₄N(CH₂CH₂COOH)(CH₂CH₂COONa), (DERIPHAT™ 16° C., 30% in water). Useful polyaminocarboxylic acids include R₁₄C(=O)NHC₂H₄(NHC₂H₄)*_{y}*NHCH₂COOH and R₁₄-substituted ethylenediaminetetraacetic acid (EDTA), where R₁₄=C₄-C₂₀ linear or branched, alkyl or alkenyl, and y=0-3.

Amphoteric imidazoline derivatives useful in the claimed invention include those derived from variously substituted 2-alkyl-2-imidazolines and 2-alkenyl-2-imidazolines which have nitrogen atoms at the 1 and 3 positions of the five-membered ring and a double bond in the 2,3 position. The alkyl or alkenyl group may be a C₄-C₂₀ linear or branched chain. The amphoteric imidazoline derivatives are produced via reactions in which the imidazoline ring opens hydrolytically under conditions allowing further reaction with such alkylating agents as sodium chloroacetate, methyl (meth)acrylate, ethyl (meth)acrylate, and (meth)acrylic acid. Useful amphoteric surfactants derived from the reaction of 1-(2-hydroxyethyl)-2-(R₁)-2-imidazolines with acrylic acid or acrylic acid esters, where R₁₅=residue of coconut fatty acids, are:
cocoamphopropionate, R₁₅-C(=O)NHCH₂CH₂N(CH₂CH₂OH)(CH₂CH₂COONa);
cocoamphocarboxypropionic acid,
R₁₅-C(=O)NHCH₂CH₂N(CH₂CH₂COOH)(CH₂CH₂CH₂CH₂COOH);
cocoamphocarboxypropionate,
R₁₅-C(=O)NHCH₂CH₂N(CH₂CH₂COONa)(CH₂CH₂CH₂CH₂COONa);
cocoamphoglycinate, R₁₅-C(=O)NHCH₂CH₂N(CH₂CH₂H)(CH₂COONa); and
cocoamphocarboxyglycinate,
[R₁₅-C(=O)NHCH₂CH₂N⁺(CH₂CH₂OH)(CH₂COONa)₂]OH⁻.

Surface-active inner salts containing at least one quaternary ammonium cation and at least one carboxy anion are called betaines. The nomenclature for betaines derives from the single compound (trimethylammonio)acetate which is called betaine and exists as an inner salt. Betaines useful as amphoteric surfactants in the claimed invention include compounds of the general formulae: R₁₆N⁺(CH₃)₂CH₂COO⁻; R₁₆CONHCH₂CH₂CH₂N⁺(CH₃)₂CH₂COO⁻; and R₁₆-O-CH₂-N⁺(CH₃)₂CH₂COO⁻, where R₁₆=C₄-C₂₀ linear or branched, alkyl, alkenyl, or fluoro or silicone functional hydrophobe group. Specific examples of betaines include N-dodecyl-N,N-dimethylglycine and cocoamidopropyl betaine and (MONATERIC™ CAB available from Mona Industries).

Typically, when fluorocarbon substituents are attached to amphoteric surfactants, those substituents are perfluoroalky groups, branched or unbranched, having 6 to 18 carbon atoms. However, these substituents may instead be partially fluorinated. They may also bear aryl functionality. Examples of fluorocarbon amphoteric surfactants include fluorinated alkyl FLUORAD™ FC100 and fluorinated alkyl ZONYL™ FSK, produced by 3M and Dupont, respectively.

Typical siloxane functional amphoteric surfactants have, for example, the structures: 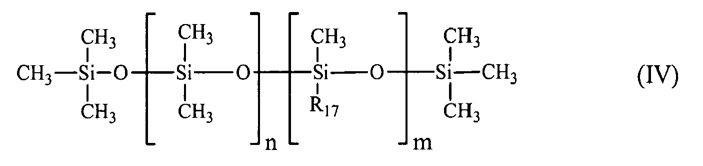 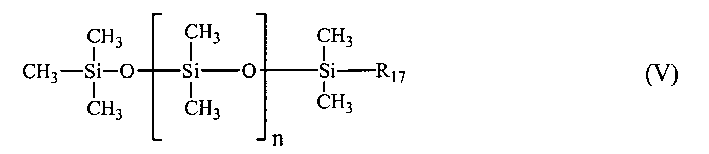 wherein R₁₇ represents an amphoteric moiety and m+n=3 to 50. An example is the polyalkyl betaine polysiloxane copolymer ABIL™ B9950 available from Goldschmidt Chemical Corporation.

Macromolecular amphoteric surfactants useful in the claimed invention include: proteins, protein hydrolysates, derivatives of protein hydrolysates, starch derivatives, and synthetic amphoteric oligomers and polymers. Of particular utility are those macromolecular ampholytes bearing carboxy functionality.

In addition to the opacifying agents and amphoteric surfactants, the compositions include one or more film forming polymers to function as binders. Any film forming polymer binder may be employed provided that the film forming polymers do not adversely interfere with the desired color or shade change, and have a T_{g} of from -60° C to greater than 80° C, or such as from -60° C to greater than 40° C, or such as from 0° C to 35° C. The film forming polymers are included in amounts of 10wt% to 90wt%, or such as from 15wt% to 70wt%, or such as from 25wt% to 60wt%. Typically, the film forming polymers are derived from a mixture of acid functional monomers and non-acid functional monomers. Suitable acid functional monomers include, but are not limited to, (meth)acrylic acid, maleic acid, fumaric acid, citraconic acid, 2-acrylamido-2-methylpropanesulfonic acid, 2-hydroxyethyl acrylol phosphate, 2-hydroxypropyl acrylol phosphate and 2-hydroxy-alpha-acrylol phosphate.

Suitable non-acid functional monomers include, but are not limited to, esters of (meth)acrylic acid such as methyl acrylate, 2-ethyl hexyl acrylate, n-butyl acrylate, n-hexyl acrylate, methyl methacrylate, hydroxy ethyl acrylate, butyl methacrylate, octyl acrylate, 2-ethoxy ethyl methacrylate, t-butyl acrylate, 1,5-pentanediol diacrylate, N,N-diethylaminoethyl acrylate, ethylene glycol diacrylate, 1,3-propanediol diacrylate, decamethylene glycol diacrylate, decamethylene glycol dimethacrylate, 1,4-cyclohexanediol diacrylate, 2,2-dimethylol propane diacrylate, glycerol diacrylate, tripropylene glycol diacrylate, glycerol triacrylate, 2,2-di(p-hydroxyphenyl)-propane dimethacrylate, triethylene glycol diacrylate, polyoxyethyl-2,2-di(p-hydroxyphenyl)-propane dimethacrylate, triethylene glycol dimethacrylate, polyoxypropyltrimethylol propane triacrylate, ethylene glycol diemthacrylate, butylene glycol dimethacrylate, 1,3-propanediol dimethacrylate, 1,2,4-butanetriol trimethacrylate, 2,2,4-trimethyl-1,3-pentanediol dimethacrylate, pentaerythritol trimethacrylate, 1-phenyl ethylene-1,2-dimethacrylate, pentaerythritol tetramethacrylate, trimethylol propane trimethacrylate, 1,5-pentanediol dimethacrylate; styrene and substituted styrene such as 2-methyl styrene and vinyl toluene and vinyl esters such as vinyl acrylate and vinyl methacrylate.

When the film forming polymer has a T_{g} of -60° C to 0° C, the film forming polymers typically have from 0.1wt% to 6wt% of the total weight of the polymer at least one carboxy functional monomer, or such as from 0.5wt% to 6wt%, or such as from 1wt% to 5wt% of at least one carboxy functional monomer. When the film forming polymer has a T_{g} of greater than 0° C to greater than 80° C, and one or more bases are included in the compositon to maintain a pH range of 3 to 11 or such as from 8 to 11, the polymer may optionally include, as polymerized units, carboxy functional monomers in amounts of from 0.1wt% to 6wt%, based on the total weight of the dry film forming polymer, or such as from 0.5wt% to 6wt%, or such as from 0.1wt% to 5wt% of the total weight of the dry film polymer.

Other suitable polymers include, but are not limited to, nonionic polymers such as polyvinyl alcohol, polyvinyl pyrrolidone, hydroxy-ethylcellulose, and hydroxyethylpropyl methylcellulose. Also polymers such as polyvinyl acetate may be used.

Optionally, polyvalent metal cations may be included to form an ionic bond with a carboxylic acid group on one or more of the monomers which compose the polymers. Any suitable polyvalent cation may be used which forms an ionic bond with the carboxylic acid groups to achieve cross-linking. Such cations include, but are not limited to, Mg²⁺, Sr²⁺, Ba²⁺, Ca²⁺, Zn²⁺, Al³⁺, Zr⁴⁺ or mixtures thereof. Such polyvalent cations are included in the imaging compositions in amounts of 0.001 to 0.1 moles/100 gm of dry polymer, or such as from 0.01 to 0.08 moles/100 gm of dry polymer, or such as from 0.02 to 0.05 moles/100 gm of dry polymer.

The compositions optionally may include one or more additives. Such additives include, but are not limited to, plasticizers, thickeners, rheology modifiers, ionic and nonionic surfactants, acid and base buffers, preservatives, flow agents and diluents.

Any suitable plasticizer may be employed. Plasticizers may be included in amounts of from 0.5wt% to 15wt%, or such as from 1wt% to 10wt% of the second component. Suitable plasticizers include, but are not limited to, phthalate esters such as dibutylphthalate, diheptylphthalate, dioctylphthalate and diallylphthalate, glycols such as polyethylene glycol and polypropylene glycol, glycol esters such as triethylene glycol diacetate, tetraethylene glycol diacetate, and dipropylene glycol dibenzoate, phosphate esters such as tricresylphosphate, triphenylphosphate, amides such as p-toluenesulfoneamide, benzenesulfoneamide, N-n-butylacetoneamide, aliphatic dibasic acid esters such as diisobutyl-adipate, dioctyladipate, dimethylsebacate, dioctylazelate, dibutylmalate, triethylcitrate, tri-n-butylacetylcitrate, butyl-laurate, dioctyl-4,5-diepoxycyclohexane-1,2-dicarboxylate, and glycerine triacetylesters.

One or more flow agents also may be included. Flow agents may be included in amounts of from 0.05wt% to 5wt% or such as from 0.1wt% to 2wt% of the second component. Suitable flow agents include, but are not limited to, copolymers of alkylacrylates. An example of such alkylacrylates is a copolymer of ethyl acrylate and 2-ethylhexyl acrylate.

Surfactants may be included in the compositions in amounts of from 0.5wt% to 10wt%, or such as from 1wt% to 5wt% of the component. Suitable non-ionic surfactants include, but are not limited to, polyethylene oxide ethers, derivatives of polyethylene oxides, aromatic ethoxylates, acetylenic ethylene oxides and block copolymers of ethylene oxide and propylene oxide. Suitable ionic surfactants include, but are not limited to, alkali metal, alkaline earth metal, ammonium, and alkanol ammonium salts of alkyl sulfates, alkyl ethoxy sulfates, and alkyl benzene sulfonates.

Any suitable thickener may be incorporated in the compositions. Typically, thickeners range from 0.05wt% to 10wt%, or such as from 1wt% to 5wt%. Suitable thickeners include, but are not limited to, low molecular weight polyurethanes such as having at least three hydrophobic groups interconnected by hydrophilic polyether groups. The molecular weight of such thickeners ranges from 10,000 to 200,000. Other suitable thickeners include hydrophobically modified alkali soluble emulsions, hydrophobically modified hydroxyethyl cellulose and hydrophobically modified polyacrylamides.

Rheology modifiers may be included in conventional amounts. Typically rheology modifiers are used in amounts of from 0.5wt% to 20wt%, or such as from 5wt% to 15wt%. Rheology modifiers include, but are not limited to, vinyl aromatic polymers and acrylic polymers.

Diluents may be included to provide a vehicle or carrier for the components. Diluents are added as needed. Solid diluents or fillers are typically added in amounts to bring the dry weight of the components to 100wt%. Solid diluents include, but are not limited to, celluloses. Liquid diluents or solvents are employed to make solutions, suspensions, dispersions or emulsions of the compositions. The solvents may be water or organic, or mixtures thereof. Organic solvents include, but are not limited to, alcohols such as methyl, ethyl and isopropyl alcohol, diisopropyl ether, diethylene glycol dimethyl ether, 1,4-dioxane, tetrahydrofuran or 1,2-dimethoxy propane, and ester such as butyrolactone, ethylene glycol carbonate and propylene glycol carbonate, an ether ester such as methoxyethyl acetate, ethoxyethyl acetate, 1-methoxypropyl-2-acetate, 2-methoxypropyl-1-acetate, 1-ethoxypropyl-2-acetate and 2-ethoxypropyl-1-acetate, ketones such as acetone and methylethyl ketone, nitriles such as acetonitrile, propionitrile and methoxypropionitrile, sulfones such as sulfolan, dimethylsulfone and diethylsulfone, and phosphoric acid esters such as trimethyl phosphate and triethyl phosphate. Solvents also include coalescing solvents such as ethers. Examples of such ethers include ethylene glycol phenyl ether and tripropylene glycol n-butyl ether.

The opaque coating compositions may be prepared by any suitable method. One method is to solubilize or disperse the water-insoluble compounds in a coalescing solvent. Any solvent which disperses or solubilizes the water-insoluble compounds may be used. Such coalescing solvents include, but are not limited to, ester alcohols and glycol ethers. The solution or dispersion is then emulsified with an aqueous base portion containing polymer binders and other water-soluble compounds. Conventional emulsification methods may be used to prepare oil in water emulsions.

The compositions may be in the form of a concentrate. In such concentrates, the solids content may range from 80wt% to 98wt%, or such as from 85wt% to 95wt%. Concentrates may be diluted with water, one or more organic solvents, or a mixture of water and one or more organic solvents. Concentrates may be diluted such that the solids content ranges from 5wt% to less than 80wt%, or such as from 10wt% to 70wt%, or such as from 20wt% to 60wt%.

The compositions may be imaged on any suitable substrate, such as metal, wood, glass, ceramic and polymer materials. Typically, the compositions are imaged on polymeric materials. Polymeric materials include, but are not limited to, cellulose and derivatives thereof, polyolefins such as polyethylene and polypropylene, vinyl chloride, polystyrenes, acrylonitrile-butadienestyrene, polyvinyl alcohol, polyacrylics, acrylonitrile-styrene polymers, vinylidene chlorides, acrylonitrile acrylic styrene polymers, acrylonitrile ethylene-propylene-terpolymer styrene polymers, polyurethanes, polyvinyl butyral polymers, poly-4-methylpentene-1 polymers, polybutene-1 polymers, poly(vinylidene fluoride) polymers, polyvinyl fluoride polymers, polycarbonates, copolyester carbonates, polyamides, polyacetals, polyphenylene oxides, polyesters such as polybutylene terephthalate and polyethylene terephthalate, polyphenylene sulfides, polyimides, polysulfones, polyether sulfones, aromatic polyesters, glycolized polyesters, polyallylates and mixtures thereof.

Such polymeric materials are typically used as support films. The films may range in thickness of 0.5 mils to 10 mils, or such as from 2 mils to 8 mils. The compositions are coated on the support films and allowed to dry. Once they are dried they are selectively imaged. The image formed on the compositions may be scored and a select portion peeled from the polymer substrate and discarded. The remaining portion may be peeled from the substrate and placed on another substrate to act as a mask. The color contrast between the mask and the second substrate or work piece along with the pattern directs workers to modify the work piece. For example, the mask may function as a stencil. The mask may be applied to a metal, wood, glass, ceramic or plastic substrate. The pattern on the mask selectively exposes the metal, wood or plastic substrate and the exposed portion is painted to form an image or logo on the substrate such as to make a sign or poster. Alternatively, the exposed portions of the substrate may be cut or scored. The cut or scored portions may be removed to leave holes for fasteners or to modify the shape of the substrate such as in cutting glass. The portions of the compositions remaining on the substrates may be peeled away and discarded. No volatile organic solvents are needed.

The compositions may be imaged by ink jet printers, laser printers or lasers. Any suitable ink jet apparatus may be used to selectively apply ink to the compositions. For example, an imaging composition may be applied to a polymer film and dried. The polymer film with the dried imaging composition is then passed through an ink jet apparatus or laser printer. An ink jet apparatus or laser printer may digitally store information in its memory for a selective mask design. As the polymer film with the imaging composition passes through the apparatus or printer ink is applied to form an image on the dry composition. Examples of suitable computer programs are standard CAD (computer aided design) programs for generation of tooling data. Workers may readily modify the selective deposition of ink on the compositions by changing the program digitally stored in the ink jet apparatus or laser printer.

Alternatively, the compositions may be imaged by a laser. The composition may be applied to a substrate and a laser programmed to selectively image the composition is applied. The heat from the laser bums the image into the dry composition. A portion is peeled from the substrate with the remaining portions acting as a mask. The exposed part of the substrate may then be modified by workers. After the workers have performed their task the mask may be peeled from the substrate and discarded. Any residue remaining is visible to the naked eye because of the color or shade contrast between the mask residues and the substrate and may be peeled away.

The coating compositions also may be used to prevent leaching of dyes from imaging compositions. Photoimaging compositions may be used to form images on substrates such as parts for aircraft, automobiles and other articles. Such substrates often are coated with primers prior to painting. The photosensitive dyes from the photoimaging compositions may leach from the photoimaging composition into the primer on the substrate. This may cause unwanted color changes and compromise the performance of the photoimaging composition. To prevent the leaching a coating composition with high pigment loading may be applied to the substrate prior to applying the photoimaging composition. Additionally, the high pigment loading in the coating composition creates a pronounced color contrast between the substrate and the color of the photoimaging composition. This provides workers with a clear image on the substrate such that they may perform a task on the substrate as directed by the color of the photoimaging composition. Further, including the pigment in the coating compositions as opposed to the photoimaging compositions increases the photospeed of the photoimaging compositions by a factor of Δ = +0.5 to +1. The coating composition and the photoimaging composition may then be peeled from the substrate and discarded by the workers. No environmentally unfriendly solvents are needed to remove the coating composition and photoimaging composition from the substrate.

In addition to the uses described above, the opaque coating compositions may be used for general masking or hiding of a substrate. For example, the opaque coating compositions may be applied over a sign to provide a blank template on which a new sign may be made. When the advertising campaign is done, the opaque coating composition with artwork may be peeled from the substrate and the process repeated. Other uses include, but are not limited to, masking windows to keep rooms at cooler temperatures or for privacy purposes.

### Example 1

### Opaque Coating Composition with Titanium dioxide

An opaque coating composition has a formula as disclosed in Table 1 below.

**TABLE 1**

| **Compounds** | **Percent Weight** |
|---|---|
| Film forming acrylic polymer binder | 80 |
| titanium dioxide | 5 |
| Cocoamphopropionate | 5 |
| Ethylene glycol phenyl ether | 1 |
| Water | 9 |

done at room temperature. Aluminum oxide pigment with an average particle size of 0.5µm is then added. The mixing is done at room temperature.

The opaque coating composition is then roller coated on a 50 cm x 30 cm polyethylene terephthalate film with a thickness of 2 mils. The film with the opaque coating is passed through a conventional laser printer which is programmed for selectively applying ink to the opaque coating to form an outline of letters and numbers. The opaque coating is then scored along the outlines and these portions are peeled from the film to form a mask with a pattern of letters and numbers.

The mask is then peeled from the film and applied to a rectangular metal plate. Paint is applied with a spray gun. The mask is peeled from the metal plate and discarded. No environmentally unfriendly solvents are used to remove the mask from the metal plate. The metal plate with the lettering may be used as a sign.

### Example 4

### Opaque Coating Composition with Zirconium Oxide

The opaque coating composition described in the table below is made.

**TABLE 5**

| **COMPONENTS** | **WEIGHT PERCENT** |
|---|---|
| Polyvinyl acetate | 20 |
| Zirconium oxide | 60 |
| 2-alkyl-2-imidazoline | 2 |
| Diethylene glycol dimethyl ether | 4 |
| Water | 14 |

The 2-alkyl-2-imidazoline is mixed with the polyvinyl acetate polymer binder to form a suspension. This suspension is then mixed with diethylene glycol dimethyl ether. Water is then added to the mixture. The mixing process is done at room temperature.

Zirconium oxide with an average particle size of 2µm is added to the above mixture to form a dispersion. The mixing is done at room temperature.

The dispersion is then spray coated on a 50 cm x 50 cm polyethylene terephthalate film with a thickness of 1 mil. The coating is dried at room temperature to form an opaque coating on the film.

The acrylic polymer is a latex polymer which may be prepared by known methods in the art, or may be obtained commercially from Rohm and Haas Company of Philidelphia, PA under the tradename RHOPLEX™ E-1801. The liquid compounds are blended together at room temperature to form an emulsion. The titanium oxide particles with an average size of 1 µm are then blended with the emulsion at room temperature to form a suspension. The suspension has a white appearance due to the titanium dioxide pigment.

The coating composition is then spray coated on a polycarbonate film having dimensions 50 cm x 40 cm and a thickness of 1 mil. The coating is air dried at room temperature and then placed in a Spectra Apollo drop-on-demand ink jet apparatus with piezoelectric drop-on-demand ink jet heads. The ink jet apparatus is programmed to selectively apply ink to the coating composition to form outlines of letters of the alphabet. After the coating composition on the polycarbonate film passes through the ink jet apparatus, the coating composition is scored along the outlines, and the portions within the outlines are peeled from the polycarbonate film. A patterned mask is left on the polycarbonate film with the images of the letters of the alphabet.

The patterned mask is then peeled from the polycarbonate film and placed on a metal plate having a rectangular shape. The mask covers the entire metal plate except for the images of the letters. The metal plate with the mask is then spray painted. The mask is then peeled from the metal plate with the lettering left on the metal plate forming a sign.

### Example 2

### Opaque Coating Composition and Photoimaging Composition

An opaque coating composition is composed of the compounds disclosed in Table 2 below.

**TABLE 2**

| **Compounds** | **Weight Percent** |
|---|---|
| Vinyl acetate/acrylic copolymer emulsion | 75 |
| Titanium dioxide | 10 |
| Ethylene glycol phenyl ether | 1 |
| Cocoamphocarboxyglycinate | 1 |
| Water | 13 |

The vinyl acetate/acrylic copolymer is known in the art. Such copolymers are commercially available from Rohm and Haas Company under the tradename ROVACE™ 661. The cocoamphocarboxyglycinate is mixed with the ethylene glycol to form a uniform suspension and then added to the copolymer emulsion and mixed. This mixture is then mixed with water. The tintanium dioxide pigment with an average particle size of 0.5µm is mixed with the emulsion. The resulting coating composition has a white appearance.

The following photosensitive component is prepared at room temperature under red light.

**TABLE 3**

| **Component** | **Weight Percent** |
|---|---|
| Vinyl acetate/acrylic copolymer emulsion | 75 |
| 2-alkyl-2-imidazoline | 2 |
| Vinyl aromatic polymer | 4 |
| Leuco Crystal Violet | 1 |
| Tribromo methyl phenyl sulfone | 5 |
| 2',4',5',7'-tetraiodo-3,4,5,6-tetrachlorofluorescein disodium salt | 1 |
| 2,2'-methylene-bis(4-methyl-6-tertbutylphenol) | 1 |
| Ethylene glycol phenyl ether | 1 |
| Water | 10 |

The copolymer, vinyl aromatic polymer, and the 2-alky-2-imidazoline are mixed in water to form an emulsion.

The imaging components: leuco crystal violet, tribromo methyl phenyl sulfone, 2',4',5',7'-tetraiodo-3,4,5,6-tetrachlorofluorescein disodium salt, and micro-encapsulated 2,2'-methylene-bis(4-methyl-6-tertbutylphenol) are solubilized in ethylene glycol phenyl ether to form an organic solution. The aqueous emulsion and the organic solution are mixed to form an oil in water emulsion photoimaging composition.

The opaque coating is roller coated on a surface of an aluminum airplane fuselage coated with BR127 epoxy primer which gives the aluminum surface a dark green color. The opaque coating is white and provides a color contrast with the aluminum surface. The opaque coating is air dried on the aluminum surface.

The photosensitive composition is spray coated on the opaque coating. The photosensitive composition is translucent and the opaque coating is visible under the photosensitive composition. The photosensitive composition is then dried.

Workers selectively image an outline of a company logo on the photosensitive composition using a 3D, 532nm Nd:YAG laser at 5mW. The outline turns purple and the white background from the opaque coating provides a sharp contrast between the purple outline and the dark green aluminum surface. Workers can readily distinguish the purple outline.

The photosensitive composition and the opaque coating beneath it are scored along the purple outline and the portion within the outline is peeled from the fuselage and discarded leaving an exposed aluminum surface. The exposed aluminum is then painted to form a company logo on the fuselage. The remainder of the photosensitive composition and the opaque coating is then peeled from the fuselage and discarded. No environmentally unfriendly organic solvents are used to remove the photosensitive composition and opaque coating from the fuselage.

There is no indication of leaching of the dyes from the photosensitive composition into the epoxy primer. No red color characteristic of such leaching is observed. Additionally, the inclusion of the pigment in the coating composition is expected to increase the photospeed of the color change by a factor of Δ = + 0.5 to +1, as measured by a conventional reflection densitometer.

### Example 3

### Opaque Coating Composition with Aluminum Oxide

The following composition is prepared at room temperature.

**TABLE 4**

| **Component** | **Weight Percent** |
|---|---|
| Copolymer of styrene and acrylic acid | 70 |
| Sodium-N-coco-β-aminopropionate | 2 |
| Aluminum oxide | 20 |
| Tripropylene glycol n-butyl ether | 2 |
| Water | 6 |

The sodium-N-coco-β-aminopropionate is mixed with the styrene and acrylic copolymer to form a suspension. This suspension is then mixed with tripropylene glycol n-butyl ether to form a second suspension. Water is then mixed with the suspension. The mixing process is

The coated film is then passed through a drop-on-demand Spectra Apollo ink jet apparatus with piezoelectric drop-on-demand ink jet heads. The ink jet apparatus is programmed for selectively applying the ink to form outlines of numbers and letters on the opaque coating composition. After the film passes through the ink jet, the outlines are scored and the portions within the outlines are peeled from the film. The remainder of the opaque coating composition is peeled from the film and applied to a metal plate to form a patterned mask. The metal plate with the mask is spray painted. The mask is then peeled from the metal plate leaving the image of the numbers and letters on the metal. Workers then fashion the metal plate into a road sign.

### Example 5

### Opaque Coating Composition with Talc

An opaque coating composition with the components disclosed in the table below is made.

**TABLE 6**

| **COMPONENT** | **WEIGHT PERCENT** |
|---|---|
| Polyvinyl Pyrrolidone | 30 |
| Talc | 40 |
| Disodium-N-tallow-β-iminodipropionate | 5 |
| Diisopropyl ether | 5 |
| Water | 20 |

The disodium-N-tallow-β-iminodipropionate is mixed with the polyvinyl pyrrolidone to form a suspension. This suspension is then mixed with diisopropyl ether. Water is then added to the mixture. The mixing is done at room temperature.

Talc pigment with an average particle size of 0.5µm is added to the mixture. Mixing is done at room temperature.

The opaque composition is then spray coated on a polyethylene terephthalate film as described in Example 4. The opaque coating is used to make a sign as in Example 4. The opaque coating is removed from the metal plate by peeling it off.

### Example 6

### Opaque Coating Composition with Antimony Trioxide and Photoimaging Composition

The opaque coating with the components listed in the table below is made.

**TABLE 7**

| **COMPONENT** | **WEIGHT PERCENT** |
|---|---|
| Polyvinyl alcohol/Polyvinyl pyrrolidone 50/50 mixture | 40 |
| Antimony trioxide | 40 |
| Cocoamphocarboxypropionate | 6 |
| Ethylene glycol phenyl ether | 4 |
| Water | 10 |

The cocoamphocarboxypropionate is mixed with the polyvinyl alcohol/polyvinyl pyrrolidone mixture to form a suspension. The ethylene glycol phenyl ether is mixed with water and this combination is mixed with the suspension. Antimony trioxide pigment with an average particle diameter of 3µm is added to the mixture to form a dispersion.

The opaque dispersion is spray coated on an aluminum airplane fuselage coated with an epoxy primer BR127. After the opaque coating is dry, a photoimaging composition with the formulation in Example 2 is applied to the opaque coating. The photoimaging composition is then selectively imaged. Workers then execute one or more tasks on the aluminum fuselage as directed by the image as in Example 2.

Including the antimony trioxide in the coating composition is expected to increase the response of the photoimaging composition to lasers by a factor of Δ = +0.5 to +1 as measured by a reflection densitometer. Also, there is no noticeable leaching of dyes from the photoimaging composition into the epoxy primer. The opaque coating and the phototimaging composition are peeled from the aluminum. No environmentally unfriendly solvents are needed.

## Claims

1. A composition comprising one or more opacifying compounds in amounts of 5wt% to 80wt%, and one or more amphoteric compounds chosen from amino carboxylic acids, amphoteric imidazoline derivatives, betaines, fluorocarbons, siloxane versions thereof and macromolecular amphoteric surfactants.

2. The composition of claim 1, wherein the one or more opacifying compounds are chosen from pigments, metal salts, silica, silicates and clays.

3. The composition of claim 1, wherein the amphoteric compounds range from 0.1wt% to 6wt% of the composition.

4. The composition of claim 1, wherein the amphoteric compounds have an isoelectric point of pH 3 to pH 8.

5. A composition comprising one or more opacifying compounds in amounts of 10wt% to 50wt% and one or more amphoteric compounds chosen from α-aminocarboxylic acids, β-aminocarboxylic acids and salts thereof.

6. The composition of claim 5, wherein the one or more opacifying compounds is chosen from titanium dioxide, aluminum oxide, zirconium oxide, antimony trioxide, ceric oxide, arsenic pentoxide magnesium oxide, cobalt oxide, cadmium oxide, chromium oxide, iron oxide, lead oxide and zinc oxide.

7. A method comprising:
a) providing a composition comprising one or more opacyfmg compounds and one or more amphoteric compounds chosen from amino carboxylic acids, amphoteric imidazoline derivatives, betaines, fluorocarbons, siloxane versions thereof and macromolecular amphoteric surfactants;
b) applying the composition to a first substrate;
c) selectively imaging the composition to form a patterned mask;
d) peeling the patterned mask from the first substrate;
e) applying the patterned mask to a second substrate; and
f) executing one or more tasks on the second substrate as directed by the patterned mask.

8. The method of claim 7, wherein the composition is imaged with an ink jet apparatus, laser printer or laser.

9. A method comprising:
a) providing a composition comprising one or more opaque compounds and one or more amphoteric compounds chosen from amino carboxylic acids, amphoteric imidazoline derivatives, betaines, fluorocarbons, siloxane versions thereof and macromolecular amphoteric surfactants;
b) applying the composition to a substrate;
c) forming an image on the composition; and
d) executing one or more tasks on the substrate as directed by the image.

10. The method of claim 9, wherein the image is formed with a laser.
